# EUROPÄISCHE PATENTANMELDUNG

(11) **EP 3 702 630 A1**
(43) Veröffentlichungstag der Anmeldung: **02.09.2020**
(21) Anmeldenummer: 20152581.3
(22) Anmeldetag: 20.01.2020
(51) Int. Cl.: F16C 11/06, F16J 15/52, F16J 3/04

(54) **DICHTUNGSBALG**

(30) Priorität: 26.02.2019 DE 102019104823
(71) Anmelder: Carl Freudenberg KG, 69469 Weinheim (DE)
(72) Erfinder: Knorr, Rainer, 10557 Berlin (DE); Maier, Jürgen, 15569 Woltersdorf (DE)

(57) **Zusammenfassung**

Dichtungsbalg, umfassend einen in Umfangsrichtung (1) ringförmigen Mantel (2) aus einem gummielastischen Werkstoff mit einem Außenumfang (3) und einem Innenumfang (4), wobei der Mantel (2) eine erste Materialdicke (5) aufweist und in axialer Richtung (6) stirnseitig beiderseits jeweils durch einen in Umfangsrichtung (1) umlaufenden Rand (7, 8) begrenzt ist. Der Mantel (2) weist außen- und/oder innenumfangseitig eine dreidimensionale Oberflächenstruktur (9) auf, die Vertiefungen (10) umfasst, wobei die Vertiefungen (10) eine zweite Materialdicke (11) aufweisen und wobei die erste Materialdicke (5) im Bereich außerhalb der Vertiefungen (10) im Bereich der Vertiefungen (10) auf die zweite Materialdicke (11) reduziert ist.

## Beschreibung

### Technisches Gebiet

Die Erfindung betrifft einen Dichtungsbalg, umfassend einen in Umfangsrichtung ringförmigen Mantel aus einem gummielastischen Werkstoff mit einem Außenumfang und einem Innenumfang, wobei der Mantel eine erste Materialdicke aufweist und in axialer Richtung stirnseitig beiderseits jeweils durch einen in Umfangsrichtung umlaufenden Rand begrenzt ist.

### Stand der Technik

Ein solcher Dichtungsbalg ist aus der DE 10 2006 039 861 A1 bekannt. Der Mantel hat eine im Wesentlichen konstante Materialdicke und weist entlang seiner axialen Erstreckung Falten auf. Der Dichtungsbalg ist also als Faltenbalg ausgebildet.

Die Oberfläche des Außenumfangs und die Oberfläche des Innenumfangs sind jeweils unstrukturiert.

Die Ränder sind einstückig ineinander übergehend und materialeinheitlich mit dem Mantel ausgebildet, wobei in beiden Rändern jeweils ein Spannring zur Befestigung des Dichtungsbalgs angeordnet ist.

### Darstellung der Erfindung

Der Erfindung liegt die Aufgabe zugrunde, einen Dichtungsbalg der eingangs genannten Art derart weiterzuentwickeln, dass dieser durch eine Werkstoffersparnis kostengünstiger herstellbar ist, ein geringeres Gewicht aufweist und trotzdem gute Gebrauchseigenschaften während einer langen Gebrauchsdauer hat.

Diese Aufgabe wird erfindungsgemäß durch einen Dichtungsbalg mit den Merkmalen von Anspruch 1 gelöst. Auf vorteilhafte Ausgestaltungen nehmen die auf Anspruch 1 direkt oder indirekt rückbezogenen Ansprüche Bezug.

Zur Lösung der Aufgabe ist es vorgesehen, dass der Mantel außen- und/oder innenumfangsseitig eine dreidimensionale Oberflächenstruktur aufweist, die Vertiefungen umfasst, wobei die Vertiefungen eine zweite Materialdicke aufweisen und wobei die erste Materialdicke außerhalb der Vertiefungen auf die zweite Materialdicke in den Vertiefungen reduziert ist. Hierbei ist von Vorteil, dass durch die dreidimensionale Oberflächenstruktur, bezogen auf einen entsprechend ausgebildeten Dichtungsbalg mit unstrukturierter Oberfläche und konstanter Materialdicke, erhebliche Mengen an Werkstoff zur Herstellung des Dichtungsbalgs eingespart werden können. Generell sind die Werkstoffkosten, bezogen auf die gesamten Herstellkosten des Dichtungsbalgs, signifikant, so dass sich eine Werkstoffersparnis entsprechend signifikant auf eine kostengünstigere Herstellbarkeit des Dichtungsbalgs auswirkt.
Durch die Werkstoffersparnis ist außerdem von Vorteil, dass der Dichtungsbalg ein geringeres Gewicht aufweist und dadurch das Gesamtsystem, in dem er zur Anwendung gelangt, beispielsweise die Lenkung eines Kraftfahrzeugs, ebenfalls ein geringeres Gewicht aufweist. Insbesondere im Bereich Kraftfahrzeugtechnik ist zunehmend Leichtbau gefordert, um zum Beispiel die immer strenger werdenden Vorgaben bezüglich Umweltschutz erfüllen zu können. Dazu leistet der Dichtungsbalg mit seiner dreidimensionalen Oberflächenstruktur einen Beitrag.

Wegen der dreidimensionalen Oberflächenstruktur hat der erfindungsgemäße Dichtungsbalg keine Nachteile bezüglich Haltbarkeit und Gebrauchseigenschaften gegenüber einem Dichtungsbalg mit unstrukturierter Oberfläche.
Vielmehr können die Gebrauchseigenschaften des Dichtungsbalgs durch die Oberflächenstruktur, zum Beispiel seine axiale Nachgiebigkeit oder seine Biegebeweglichkeit, besonders gut an die jeweiligen Gegebenheiten des Anwendungsfalles angepasst werden.

Die zweite Materialdicke kann zu der ersten Materialdicke in einem Verhältnis stehen, das 0,25 bis 0,75 beträgt. Als dreidimensionale Oberflächenstruktur wird also nicht zum Beispiel eine herstellungsbedingte Oberflächenrauigkeit verstanden, sondern eine Oberflächenstruktur, bei der die zweite Materialdicke in den Vertiefungen, bezogen auf die erste Materialdicke außerhalb der Vertiefungen, bewusst deutlich reduziert ist.

Nach einer vorteilhaften Ausgestaltung kann es vorgesehen sein, dass die zweite Materialdicke zu der ersten Materialdicke in einem Verhältnis steht, das konstant ist. Durch dieses konstante Verhältnis ist die zweite Materialdicke im Bereich der Vertiefungen an die erste Materialdicke im Bereich außerhalb der Vertiefungen angepasst. Die Werkstoffersparnis ist durch eine solche Maßnahme optimiert. Bei einer größeren ersten Materialdicke können die Vertiefungen dadurch, absolut betrachtet, tiefer sein, als bei einer kleineren ersten Materialdicke, insbesondere dann, wenn die erste Materialdicke des Mantels entlang seiner axialen Erstreckung variiert.

Ist die Dicke des Mantels außerhalb der Vertiefungen demgegenüber konstant, ist auch das Verhältnis aus zweiter Materialdicke zu erster Materialdicke konstant.

Ist der Mantel außerhalb der Vertiefungen, wie zuvor beschrieben, unterschiedlich dick, können die Bereiche der Vertiefungen trotzdem eine konstante zweite Materialdicke aufweisen.

Durch die Ausgestaltung der dreidimensionalen Oberflächenstruktur, insbesondere durch die vorgesehenen Materialdicken und/oder die zuvor beschriebenen Verhältnisse, können die Gebrauchseigenschaften des Dichtungsbalgs besonders gut an die jeweiligen Gegebenheiten des Anwendungsfalles angepasst werden.

Um gleichbleibend gute Gebrauchseigenschaften während einer langen Gebrauchsdauer zu erreichen, muss u. a. der Mantel des Dichtungsbalgs eine möglichst lange Lebensdauer aufweisen. Hier ist der Konstrukteur häufig mit einander widersprechenden Vorgaben konfrontiert. Eine lange Lebensdauer wird u. a. durch einen hinreichend stabilen Mantel erreicht, der jedoch im eingebauten Zustand hohe Axialkräfte bedingen kann, mit denen die Ränder des Dichtungsbalgs die angrenzenden Maschinenelemente berühren. Eine unerwünscht hohe Axialkraft kann dadurch reduziert werden, dass die erfindungsgemäße dreidimensionale Oberflächenstruktur vorgesehen ist. Dadurch kann nicht nur die Axialkraft der Ränder an den axial angrenzenden Maschinenelementen eingestellt werden. Durch die Reduzierung der Axialkraft ergibt sich eine einfachere Montage des Dichtungsbalgs mit dem angrenzenden Maschinenelement, zum Beispiel einem Kugelgelenk.

Der Mantel kann stirnseitig beiderseits jeweils einen Übergang zu den entsprechenden Rändern aufweisen, wobei der Mantel nur mit der ersten Materialdicke in die Ränder übergehend ausgebildet ist. Durch eine solche Ausgestaltung wird eine Schwächung der Übergänge vermieden, die während einer langen Gebrauchsdauer zu einer Materialermüdung, zu Rissbildung und damit zu einem unerwünscht frühen Ausfall des Dichtungsbalgs führen könnte.

Der Mantel ist bevorzugt im Wesentlichen vollflächig mit den Vertiefungen versehen. Dadurch ergibt sich eine große Werkstoffersparnis, eine große Reduzierung des Gewichts und eine signifikante Reduzierung der Herstellungskosten des Dichtungsbalgs.

Die Vertiefungen sind einander in axialer Richtung und/oder in Umfangsrichtung jeweils mit Abstand benachbart zugeordnet. Die zuvor beschriebenen Vorteile werden erreicht, wenn die Vertiefungen einander in axialer und in Umfangsrichtung jeweils mit Abstand benachbart zugeordnet sind. Die Auslegung der Abstände zwischen den Vertiefungen ist abhängig vom jeweiligen Anwendungsfall und kann zum Beispiel durch Dauerhaltbarkeitsversuche ermittelt werden.

Ebenfalls abhängig von den jeweiligen Gegebenheiten des Anwendungsfalles ist es, ob der Mantel die dreidimensionale Oberflächenstruktur außen- und/oder innenumfangsseitig aufweist.
Eine nur außenumfangsseitig auf den Mantel aufgebrachte Oberflächenstruktur hat den Vorteil einer eher einfachen Herstellbarkeit.

Nach einer anderen Ausgestaltung kann es vorgesehen sein, dass die dreidimensionale Oberflächenstruktur nur innenumfangsseitig am Mantel angeordnet ist. Hierbei ist von Vorteil, dass der Dichtungsbalg trotz unstrukturiertem Außenumfang durch eine Werkstoffersparnis kostengünstig herstellbar ist und ein geringes Gewicht aufweist. Durch den glatten Außenumfang können Verunreinigungen aus der Umgebung des Dichtungsbalgs nur schlecht am Außenumfang anhaften. Der Dichtungsbalg ist dadurch vor einer verunreinigungsbedingten Beschädigung während seiner Gebrauchsdauer geschützt.

Für manche Anwendungsfälle, in denen zum Beispiel die mechanischen Belastungen auf den Dichtungsbalg eher gering sind, kann es vorgesehen sein, dass der Mantel außen- und innenumfangsseitig eine dreidimensionale Oberflächenstruktur aufweist. Die Werkstoffersparnis und Gewichtsreduzierung sind in einem solchen Fall jeweils besonders groß.

Nach einer ersten Ausgestaltung kann es vorgesehen sein, dass die Vertiefungen als Kalotten ausgebildet sind. Kalottenförmig ausgebildete Vertiefungen haben ein besonders großes Volumen bei vorgegebener Oberfläche. Weniger tiefe Kalotten können zum Beispiel linsenförmig ausgebildet sein, Kalotten mit größerer Tiefe im Wesentlichen halbkugelförmig.

Die Kalotten können, im Umfangsrichtung betrachtet, in gedachten Radialebenen des Mantels angeordnet sein, wobei die Kalotten einander axial benachbarter Radialebenen einander auf Lücke zugeordnet sind. Durch eine solche Zuordnung auf Lücke können besonders viele kalottenförmige Vertiefungen auf der Oberfläche des Mantels angeordnet werden. Die dreidimensionale Oberflächenstruktur des Dichtungsbalgs ist ähnlich der dreidimensionalen Oberflächenstruktur eines Golfballs. Bei einem Golfball hat die dreidimensionale Oberflächenstruktur aerodynamische Gründung.

Nach einer anderen Ausgestaltung kann es vorgesehen sein, dass die Vertiefungen als Nuten ausgebildet sind. Um eine möglichst große Werkstoffersparnis und Gewichtsreduzierung zu erreichen, erstrecken sich die Nuten bevorzugt in axialer Richtung des Mantels nahezu bis zu den Rändern. Wie zuvor beschrieben, haben die Übergänge zu den Rändern bevorzugt die erste Materialdicke.
Um gebrauchsdauerverringernde Kerbspannungen im gummielastischen Werkstoff des Dichtungsbalgs zu vermeiden, sollten scharfkantige Übergänge vermieden werden.

Die Vertiefungen können als hintereinander gereihte Segmente von Nuten ausgebildet sein. Eine solche Ausgestaltung hat gegenüber von durchgängig ausgebildeten Nuten den Vorteil, dass gezielt auf einzelne geometrische Bereiche des Mantels hinsichtlich des Faltverhaltens Einfluss genommen werden kann.

Vorteilhaft kann es vorgesehen sein, dass die Nuten in axialer Richtung beiderseits jeweils einen stetigen Auslauf ohne sprunghafte Richtungsänderungen von der zweiten Materialdicke auf die erste Materialdicke aufweisen.
Die Nuten können zwischen den axial beiderseits angeordneten Ausläufen jeweils eine konstante Tiefe aufweisen oder, wie zuvor zu den Kalotten ausgeführt, eine variable Tiefe, zum Beispiel abhängig von einer sich verändernden ersten Materialdicke.

Gute Gebrauchseigenschaften weist ein Dichtungsbalg mit Nuten beispielsweise dann auf, wenn die Nuten, in Umfangsrichtung betrachtet, eine erste Breite aufweisen, wobei die einander in Umfangsrichtung benachbarten Nuten durch Stege voneinander getrennt sind und wobei die Stege eine zweite Breite aufweisen, die im Wesentlichen der ersten Breite entspricht.
Die zuvor beschriebenen Nuten sind besonders einfach und prozesssicher herstellbar.

### Kurzbeschreibung der Zeichnung

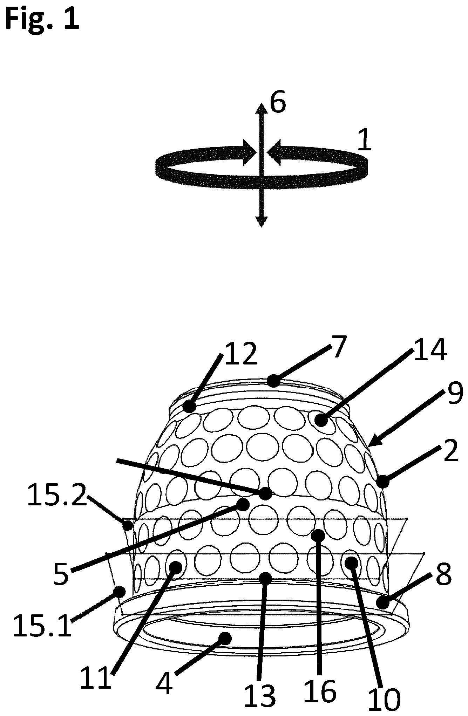

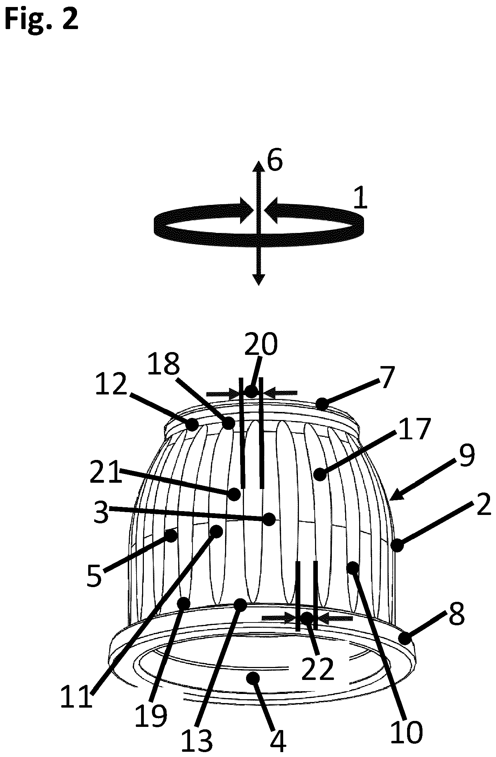

Zwei Ausführungsbeispiele des erfindungsgemäßen Dichtungsbalgs werden nachfolgend anhand der Figuren 1 und 2 näher beschrieben.

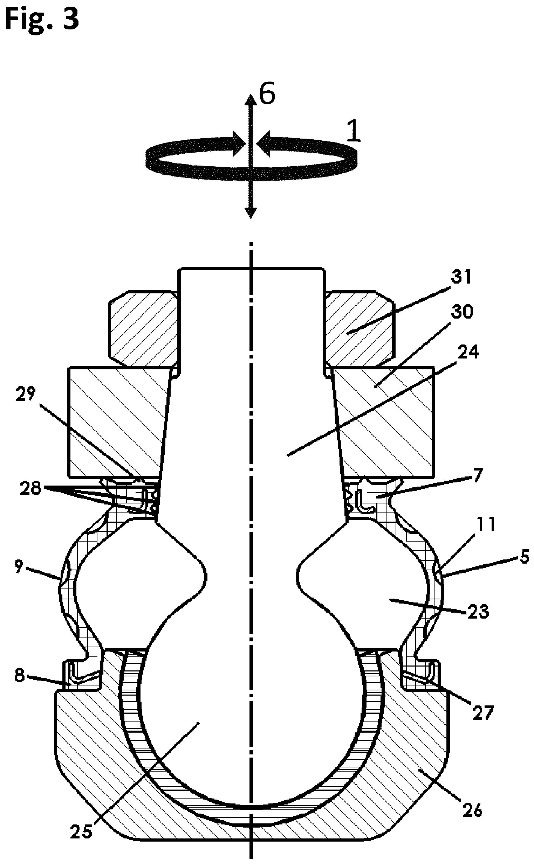

In Figur 3 ist eine Dichtungsbalg-Anordnung gezeigt, in der einer der Dichtungsbälge gemäß Figuren 1 oder 2 zur Anwendung gelangt.

### Ausführung der Erfindung

In den Figuren 1 und 2 ist jeweils ein Ausführungsbeispiel eines erfindungsgemäßen Dichtungsbalgs in schematischer Darstellung gezeigt.

In den Figuren 1 und 2 ist jeweils ein Dichtungsbalg gezeigt, mit einem ringförmigen Mantel 2, der aus einem gummielastischen Werkstoff besteht. Der Mantel 2 hat einen Außenumfang 3 und einen Innenumfang 4.
Der Innenumfang 4 kann entweder eine unstrukturierte Oberfläche aufweisen oder ebenfalls mit einer dreidimensionalen Oberflächenstruktur 9 versehen sein, zum Beispiel entsprechend der dreidimensionalen Oberflächenstruktur 9 auf dem Außenumfang 3.

Der Mantel 2 weist eine erste Materialdicke 5 auf und erstreckt sich in axialer Richtung 6 zwischen den umlaufenden Rändern 7, 8. Die gezeigten Vertiefungen 10 haben eine zweite Materialdicke 11, wobei die erste Materialdicke 5 außerhalb der Vertiefungen 10 auf die zweite Materialdicke 11 in den Vertiefungen 10 reduziert ist.

Im dargestellten Ausführungsbeispiel beträgt das Verhältnis aus zweiter Materialdicke zu erster Materialdicke etwa 0,5, wobei dieses Verhältnis konstant ist.

Der Außenumfang 3 des Mantels 2 ist im Wesentlichen vollflächig mit den Vertiefungen 10 überdeckt.

In Figur 1 ist ein erstes Ausführungsbeispiel des Dichtungsbalgs gezeigt. Die Vertiefungen 10 sind als Kalotten 14 ausgebildet, wobei die Kalotten 14 im Wesentlichen halbkugelförmig ausgebildet sind. Die Kalotten 14 sind einander in axialer Richtung 6 und in Umfangsrichtung 1 jeweils mit Abstand benachbart zugeordnet und, in Umfangsrichtung 1 betrachtet, in gedachten Radialebenen 15.1, 15.2, ... des Mantels 2 angeordnet.
Die Kalotten 14 einander axial benachbarter Radialebenen 15.1, 15.2, ... sind einander auf Lücke 16 zugeordnet, sodass, bezogen auf die Oberfläche, besonders viele Kalotten 14 auf dem Außenumfang 3 angeordnet werden können.

In Figur 2 ist ein Balg gezeigt, der, bezogen auf den Dichtungsbalg aus Figur 1, abweichend gestaltete Vertiefungen 10 aufweist.

Die Vertiefungen 10 sind hier als Nuten 17 ausgebildet und erstrecken sich in axialer Richtung 6 des Mantels 2 jeweils bis fast an die Ränder 7, 8.
In axialer Richtung beiderseits der Nuten 17 ist jeweils ein stetiger Auslauf 18, 19 vorgesehen, wobei im Auslauf 18, 19 die zweite Materialdicke 11 ohne sprunghafte Richtungsänderungen in die erste Materialdicke 5 übergeht. Dadurch werden Kerbspannungen, die während der bestimmungsgemäßen Verwendung des Dichtungsbalgs in diesem Bereich zu einer Beschädigung/Zerstörung führen könnten, praktisch ausgeschlossen.

Die Nuten 17 weisen, in Umfangsrichtung 1 betrachtet, eine erste Breite 20 auf, wobei die einander in Umfangsrichtung 1 benachbarten Nuten 17 durch Stege 21 voneinander getrennt sind.

Im hier gezeigten Ausführungsbeispiel weisen die Stege 21 eine zweite Breite 22 auf, die im Wesentlichen der ersten Breite 20 entspricht.

In Figur 3 ist einer der in den Figuren 1 oder 2 gezeigten und zuvor beschriebenen Dichtungsbälge während seiner bestimmungsgemäßen Verwendung im eingebauten Zustand gezeigt, hier als Bestandteil einer Lenkung eines Kraftfahrzeugs. Die Dichtungsbalg-Anordnung umfasst ein Kugelgelenk 23 mit einem Kugelzapfen 24, dessen Gelenkkugel 25 innerhalb eines Gehäuses 26 drehbeweglich und schwenkbar gelagert ist. Im Rand 8 ist ein Spannelement 27 angeordnet, durch das der Dichtungsbalg statisch dichtend am Gehäuse 26 befestigt ist.

Stirnseitig andererseits umschließt der Rand 7 den Kugelzapfen 24 des Kugelgelenks 23, wobei der Rand 7 radial innenseitig den Kugelzapfen 24 mit Dichtlippen 28 dichtend umschließt. Der Rand 7 weist stirnseitig auf der dem Rand 8 axial abgewandten Seite eine Axialdichtlippe 29 auf, die ein Hebelauge 30 des Kugelgelenks 23 unter axialer Vorspannung dichtend berührt. Die Dichtlippen 28 und die Axialdichtlippe 29 dichten jeweils dynamisch ab. Das Hebelauge 30 wird durch ein Befestigungselement 31 in Form einer Mutter, die auf den Kugelzapfen 24 aufgeschraubt ist, in seiner Position gehalten.

Im eingebauten Zustand wird der Dichtungsbalg, bezogen auf seine herstellungsbedingte Form, die in den Figuren 1 und 2 gezeigt ist, gestaucht, sodass sich dadurch die im Wesentlichen kugelförmige Gestalt des Mantels 2 ergibt.
Davon abweichende Geometrien des Mantels 2, zum Beispiel ein Mantel mit mehreren Falten, sind ebenfalls möglich.

## Patentansprüche

1. Dichtungsbalg, umfassend einen in Umfangsrichtung (1) ringförmigen Mantel (2) aus einem gummielastischen Werkstoff mit einem Außenumfang (3) und einem Innenumfang (4), wobei der Mantel (2) eine erste Materialdicke (5) aufweist und in axialer Richtung (6) stirnseitig beiderseits jeweils durch einen in Umfangsrichtung (1) umlaufenden Rand (7, 8) begrenzt ist, **dadurch gekennzeichnet, dass** der Mantel (2) außen- und/oder innenumfangseitig eine dreidimensionale Oberflächenstruktur (9) aufweist, die Vertiefungen (10) umfasst, dass die Vertiefungen (10) eine zweite Materialdicke (11) aufweisen und dass die erste Materialdicke (5) außerhalb der Vertiefungen (10) auf die zweite Materialdicke (11) in den Vertiefungen (10) reduziert ist.

2. Dichtungsbalg nach Anspruch 1, **dadurch gekennzeichnet, dass** die zweite Materialdicke (11) zu der ersten Materialdicke (5) in einem Verhältnis steht, das 0,25 bis 0,75 beträgt.

3. Dichtungsbalg nach einem der Ansprüche 1 oder 2, **dadurch gekennzeichnet, dass** die zweite Materialdicke (11) zu der ersten Materialdicke (5) in einem Verhältnis steht, das konstant ist.

4. Dichtungsbalg nach einem der Ansprüche 1 bis 3, **dadurch gekennzeichnet, dass** die zweite Materialdicke (11) konstant ist.

5. Dichtungsbalg nach einem der Ansprüche 1 bis 4, **dadurch gekennzeichnet, dass** der Mantel (2) stirnseitig beiderseits jeweils einen Übergang (12, 13) zu den entsprechenden Rändern (7, 8) aufweist und dass der Mantel (2) nur mit der ersten Materialdicke (5) in die Ränder (7, 8) übergehend ausgebildet ist.

6. Dichtungsbalg nach einem der Ansprüche 1 bis 5, **dadurch gekennzeichnet, dass** der Mantel (2) im wesentlichen vollflächig mit den Vertiefungen (10) versehen ist.

7. Dichtungsbalg nach einem der Ansprüche 1 bis 6, **dadurch gekennzeichnet, dass** die Vertiefungen (10) einander in axialer Richtung (6) und/oder in Umfangsrichtung (1) jeweils mit Abstand benachbart zugeordnet sind.

8. Dichtungsbalg nach einem der Ansprüche 1 bis 7, **dadurch gekennzeichnet, dass** die Vertiefungen (10) als Kalotten (14) ausgebildet sind.

9. Dichtungsbalg nach Anspruch 8, **dadurch gekennzeichnet, dass** die Kalotten (14) im Wesentlichen halbkugelförmig ausgebildet sind.

10. Dichtungsbalg nach einem der Ansprüche 8 oder 9, **dadurch gekennzeichnet, dass** die Kalotten (14), in Umfangsrichtung (1) betrachtet, in gedachten Radialebenen (15.1, 15.2, ...) des Mantels (2) angeordnet sind und dass die Kalotten (14) einander axial benachbarter Radialebenen (15.1, 15.2, ...) einander auf Lücke (16) zugeordnet sind.

11. Dichtungsbalg nach einem der Ansprüche 1 bis 7, **dadurch gekennzeichnet, dass** die Vertiefungen (10) als Nuten (17) ausgebildet sind.

12. Dichtungsbalg nach Anspruch 11, **dadurch gekennzeichnet, dass** sich die Nuten (17) in axialer Richtung (6) des Mantels (2) zwischen den Rändern (7, 8) erstrecken.

13. Dichtungsbalg nach einem der Ansprüche 11 oder 12, **dadurch gekennzeichnet, dass** die Nuten (17) in axialer Richtung (6) beiderseits jeweils einen stetigen Auslauf (18, 19) ohne sprunghafte Richtungsänderungen von der zweiten Materialdicke (11) auf die erste Materialdicke (5) aufweisen.

14. Dichtungsbalg nach einem der Ansprüche 11 bis 13, **dadurch gekennzeichnet, dass** die Nuten (17), in Umfangsrichtung (1) betrachtet, eine erste Breite (20) aufweisen, dass die einander in Umfangsrichtung (1) benachbarten Nuten (17) durch Stege (21) voneinander getrennt sind und dass die Stege (21) eine zweite Breite (22) aufweisen, die im Wesentlichen der ersten Breite (20) entspricht.
